# EUROPEAN PATENT APPLICATION

(11) **EP 1 070 961 A1**
(43) Date of publication of application: **24.01.2001**
(21) Application number: 99305703.3
(22) Date of filing: 19.07.1999
(51) Int. Cl.: G01N 29/10

(54) **Test apparatus**

(71) Applicant: BRITISH TELECOMMUNICATIONS public limited company, London EC1A 7AJ (GB)
(72) Inventor: The designation of the inventor has not yet been filed
(74) Representative: Roberts, Simon Christopher

(57) **Abstract**

Timber decay test apparatus which captures an acoustic response from a timber element, transforms the acoustic response into the frequency domain, smoothes the frequency spectrum of the acoustic response and extracts therefrom a frequency component, the selected frequency component indicating the extent of decay within the timber element,

## Description

This invention concerns a test apparatus and method for determining whether timber elements contain decay and/or damage due to insect attack. In particular the invention concerns apparatus for the testing of timber poles, as are widely used in telecommunication and utility networks.

It is well known that timber poles of the sort commonly used in telecommunications and utility networks (hereinafter "telegraph poles") are liable to decay due to their exposure in external environments, such decay reducing the strength of such poles so that there may be a significant safety hazard if network personnel were to climb the pole in order to carry out installation and/or maintenance activities. Because of the tendency of timber poles to decay from the centre region outwards, it is possible that the pole has a core of decayed timber and an annular ring of undecayed timber such that the pole appears to be safe to the user whilst having inadequate strength, i.e. the pole is not sufficiently strong to safely support the weight of a user. The apparatus and method of the present invention are7 also suitable for use in detecting damage caused by insects such as termites. In the interests of brevity and clarity the following discussion will refer only to decay, but it should be read as a reference to decay and/or insect damage.

Known test methods for detecting timber decay in telegraph poles have involved attaching accelerometers to the pole to be tested and measuring the vibration of the pole when struck, but these methods have not proved to be sufficiently reliable and repeatable in practice and thus are not widely used. The normal practice for checking whether a telegraph pole is safe to climb involves a user striking the pole with a hammer and listening to the sound generated thereby. The user will then make a decision, based upon their experience, of whether they feel that the pole is safe to climb. There is a significant disadvantage with this method of determining pole decay as the method is highly subjective and the assessment of the condition of a given pole will vary from user to user. There is an understandable tendency to err on the side of safety which means that safe poles are unnecessarily replaced. It is estimated that the un-necessary replacement of poles costs BT at least £10m per year.

According to a first aspect of the invention there is provided a timber decay test apparatus comprising; data capture means configured to, in use, capture the acoustic response of a timber element; data processing means configured to, in use, select a component from the frequency spectrum of the acoustic response; comparison means configured to, in use, compare the selected frequency spectrum component with stored reference data; and indicator means configured to, in use, indicate the decay state of the timber element in response to the comparison of the selected frequency spectrum component with said reference data.

Preferably the data capture means comprises a digital recording means. The data processing means may generate the frequency spectrum of the acoustic response by transforming the time spectrum of the acoustic response, preferably by applying a Fourier transform to the time spectrum of the acoustic response. The test apparatus may further comprise storage means configured to store at least one selected frequency spectrum component.

Additionally, the test apparatus may further comprise communication means configured to communicate at least one selected frequency spectrum component to a remote database.

According to a second aspect of the invention there is provided a method of testing for decay in a timber element, the method comprising the steps of; generating an acoustic response from the timber element; selecting a component from the frequency spectrum of the acoustic response; comparing the selected frequency component with stored reference data; and determining the state of the timber element on the basis of the results of the comparison step.

Preferably the frequency spectrum of the acoustic response is generated by transforming the time spectrum of the acoustic response. Preferably the acoustic spectrum is smoothed to reduce the effects of noise.

The selected frequency component may be the frequency at which the acoustic response frequency spectrum has substantially its maximum value. Alternatively, the selected frequency component may be a frequency at which the acoustic response frequency spectrum is within the range of 20% to 85% of the maximum value of the acoustic response frequency spectrum. In particular the selected frequency component is the frequency at which the acoustic response frequency spectrum is substantially 50% of the maximum value of the acoustic response frequency spectrum.

A data carrier may contain computer code for loading into a computer for the performance of any of the above methods. An apparatus as described above may comprise a personal computer and a data carrier as described above.

The invention will now be described, by way of example only, with reference to the following figures in which;
Figure 1 shows a schematic depiction of apparatus according to the present invention;
Figure 2 shows a schematic depiction of apparatus according to a preferred embodiment of the present invention;
Figure 3 is a graph showing acoustic power radiation from a monopole;
Figure 4 shows the frequency spectrum of the acoustic response of a telegraph pole when tested using the method of the present invention; and
Figure 5 shows the selected frequency component from the testing of a number of telegraph poles according to the method of the present invention.

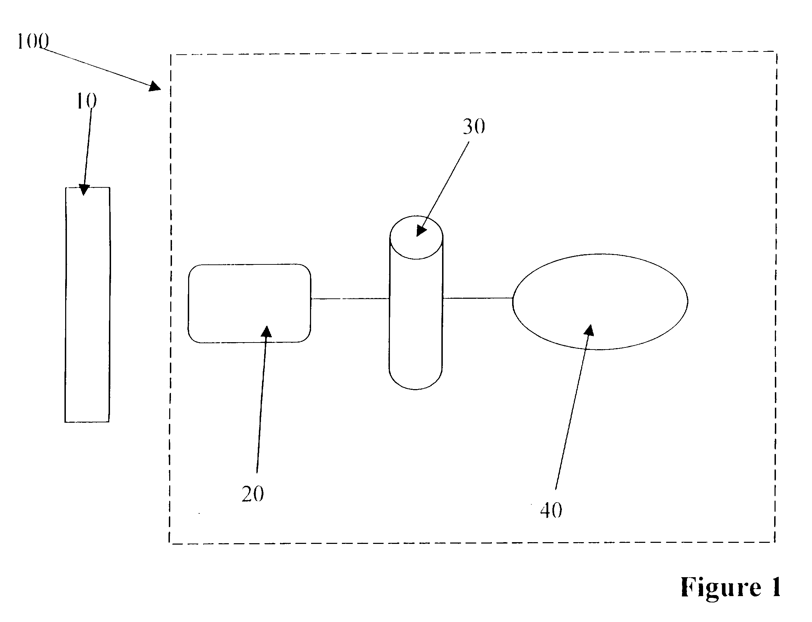

Figure 1 shows a schematic depiction of apparatus 100 according to the present invention which comprises data capture means 20, data processing means 30 and indicator means 40. The data capture means 20 is in communication with the data processing means 30, which in turn is in communication with indicator means 40. The apparatus 100 is arranged so that the data capture means is, in use, located sufficiently close to the timber element 10 to be tested such that the magnitude of the test signal from the timber element is significantly larger than any background noise.

The test procedure is initiated by striking the timber element 10 with a tool, preferably a hammer or similar, to produce an acoustic signal which is then captured by the data capture means 20. The acoustic signal is then fed to the data processing means, which transforms the acoustic signal from the time domain to the frequency domain and preferably processes further the frequency spectrum of the acoustic signal. The data processing means then extracts a component from the frequency spectrum, for example a frequency associated with a significant rate of change in the frequency spectrum or the frequency at which the frequency spectrum of the acoustic signal is substantially its maximum value, etc. The indicator means then indicates to the user of the apparatus whether the pole is safe to climb or not, either by means of, for example, a visual display or by producing audible tones or a voiced output. The indicator means may alternatively give an indication of the level of decay which is judged to be present in the timber element, the user of the apparatus interpreting this indication when deciding whether to proceed with a particular course of action or not. Additionally, if the test result indicates that the timber element is structurally safe but close to the safety threshold, this information may be used to place the timber element in a programme of remedial work or replacement.

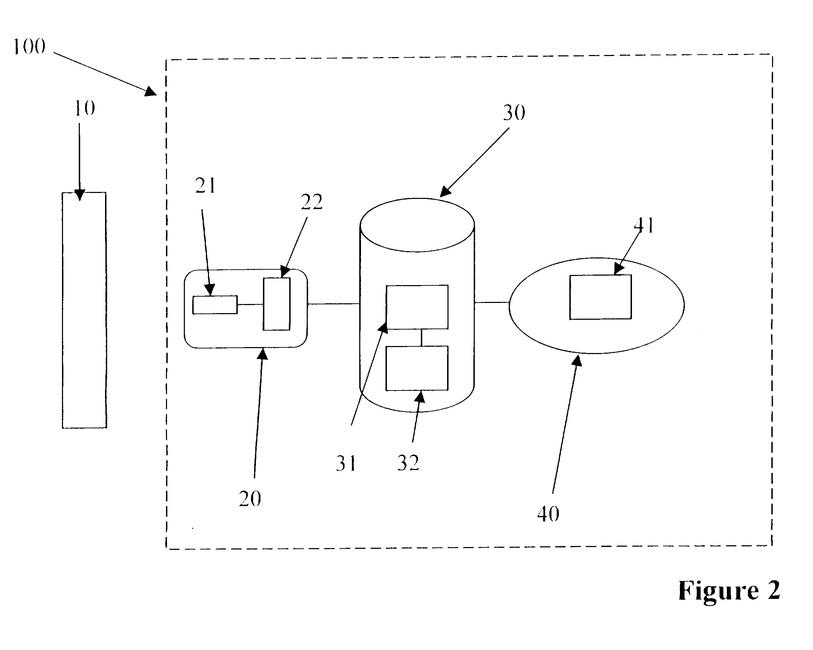

In a preferred embodiment of the present invention shown in Figure 2, the data capture means 20 comprises a microphone 21 and a DAT (Digital Audio Tape) recorder 22, the data processing 30 means comprises a fast Fourier transform (FFT) analyser 31 and a personal computer 32. The indicator means 40 was provided by the monitor of the personal computer 41. When the telegraph pole was struck with the hammer the acoustic response was captured by the microphone and recorded by the DAT recorder in a digitised format that could be fed into the FFT analyser. The FFT analyser performed a fast Fourier transform in order to transform the acoustic response of the telegraph pole from the time domain to the frequency domain. The frequency spectrum was then smoothed to minimise the background noise and other random events.

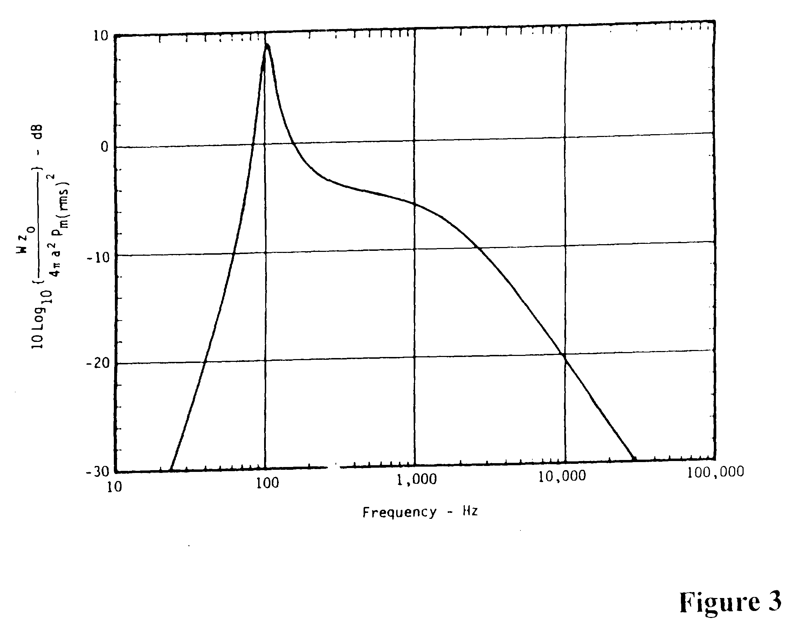

It is known from acoustic theory (see, for example, F Fahy, "Sound and structural vibration", Academic Press, 1985 or DD Reynolds, "Engineering principles of acoustics", Allyn & Bacon, 1981) that vibrating surfaces require a minimum surface area in order to produce sound energy of lower frequencies (i.e. longer wavelengths). For timber elements such as telegraph poles, the surface area of the element is not large enough to produce significant amounts of acoustic energy for requencies below approximately 250 Hz (the precise value of this cut-off frequency will vary depending upon the height and the diameter of the pole). Additionally it is known that, assuming a vibrating element has a single degree of freedom, that this lower cut-off frequency is dependent upon the natural frequency of the vibrating element. Reynolds, *op cit,* discloses the acoustic characteristic of such a vibrating element (see Figure 3), which indicates that such vibrating elements act as a precise high-pass filter with a cut-off frequency dependent upon the natural frequency of the element. The natural frequency of a timber element can thus be found by determining the frequency at which the smoothed frequency spectrum has its maximum value, or by determining a frequency element that is characteristic of the frequency spectrum, i.e. by selecting a frequency element from either the rising edge before the spectrum maximum or the falling edge following the spectrum maximum. This natural frequency of the timber element, or a frequency characteristic of the frequency spectrum, can then be used to determine the state of the timber element.

Apparatus similar to that shown in Figure 2 was used to assess the condition of a number of telegraph poles, the condition of which were known. The microphone 21 was a ½" Falcon microphone and preamplifier type 2662, the DAT recorder 22 was a TEAC RD-130TE 8 channel data recorder and the FFT analyser 31 was a Ono Sokki CF210 FFT analyser. A personal computer processed the FFT data using Microsoft Excel. The microphone was positioned approximately 60cm above ground level at a distance of approximately 1 metre from the pole under test, the microphone being pointed at the pole. Some of the poles had no decay, others had some physical damage (i.e. from an impact) but no decay and a number had some level of decay, either interior decay, exterior decay or a combination of both interior and exterior decay.

The data recorded by the data recorder was processed by the FFT analyser and the resulting acoustic spectrum was then smoothed, using Microsoft Excel, by averaging each data point in the spectrum with the two data points preceding it and the two data points following it. Despite this smoothing of the acoustic spectra, some of the spectra still contained a number of peaks at or near to the maximum point of the spectrum and some noise spikes were still present on the rising and falling edges, although in general the noise spikes were more prevalent on the falling edge.

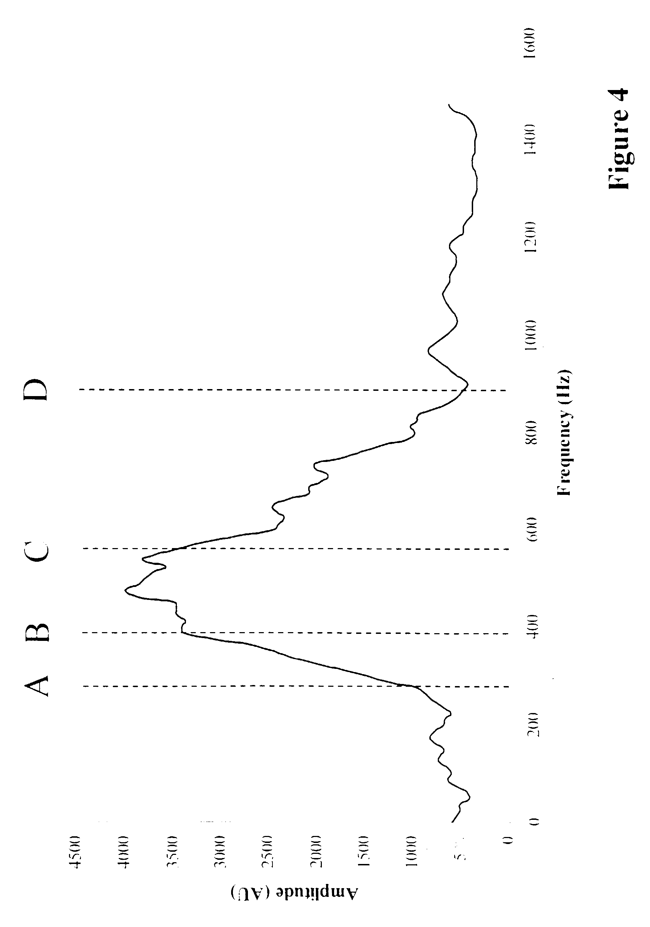

Figure 4 shows the smoothed frequency spectrum obtained from one of the tests, with the amplitude of the acoustic response (in arbitrary units) being plotted against the frequency of the acoustic response (in hertz). The spectrum has three main regions:
- a rising edge from approximately 250 Hz to approximately 400 Hz (shown in Figure 4 between lines A & B)
- a peak from approximately 400 Hz to approximately 550 Hz (shown in Figure 4 between lines B & C)
- a falling edge from approximately 550 Hz to approximately 900 Hz (shown in Figure 4 between lines C & D)

It is believed that background noise constitutes the spectrum for frequencies below approximately 200 Hz and above approximately 900 Hz.

It can be seen from Figure 4 that the rising edge region is approximately linear and is relatively free from spikes (which are due to background noise, interference, etc.). The peak region contains two peaks having a similar magnitude, but it is not entirely clear whether these peaks are a component of the acoustic response of the pole or are caused by background noise. Similarly, the falling edge region contains a number of peaks, which are probably caused by background noise, whilst the spectrum is not particularly linear over the region (even when the peaks are discounted).

For this test it was decided to select a frequency component that could be used to characterise the frequency spectrum from the rising edge region because of its linearity and lack of noise effects. It should be understood that for a different timber element under test which generated a different frequency spectrum it may be preferable to select the natural frequency of the spectrum from the peak region of the spectrum (i.e. when the peak region is relatively narrow, with a single, well-defined peak) or it may be preferable to select a frequency component that could be used to characterise the frequency spectrum from falling edge region (i.e. if the falling edge was approximately linear and contained few noise peaks). The choice of which frequency component to choose depends entirely on the characteristics of the different region of a frequency spectrum.

In order to select a frequency component from the rising edge of the frequency component, an amplitude which is a fraction of the maximum amplitude of the frequency spectrum can be selected so that the frequency at which the spectrum first reaches that amplitude is within the rising edge region. For the example shown in Figure 4, the spectrum amplitude over the rising edge region varies from approximately 800 to 3400 units. The maximum amplitude of the spectrum (A₀) was 3980, giving a range for the fractional amplitude, within which the selected frequency component must be, of 0.20A₀ to 0.85A₀ (although, clearly, these values will depend upon the characteristics of the frequency spectrum under analysis). For the test shown in Figure 4 it was decided to select the frequency component at which the amplitude of the frequency spectrum first reached 50% of the maximum value (i.e. 0.5 A₀) giving a selected frequency component of 318Hz.

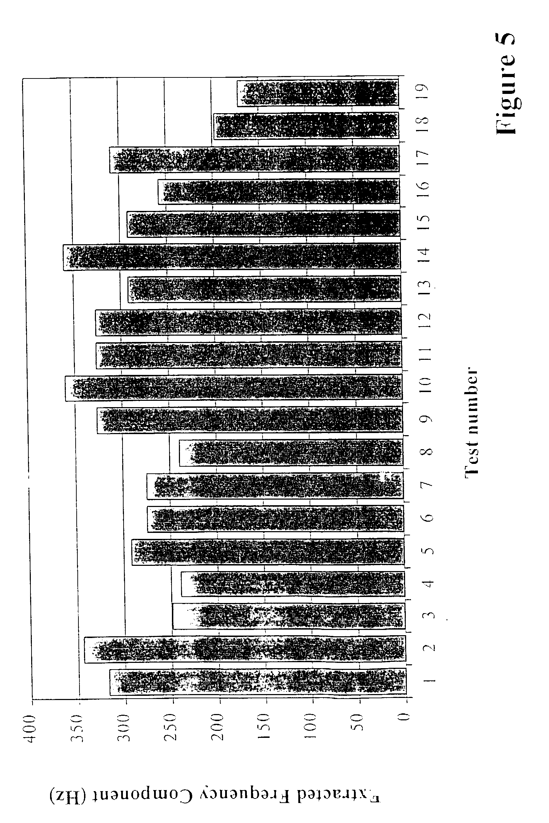

Figure 5 shows the selected frequency components for the telegraph pole tests for a number of different tests (the frequency spectrum shown in Figure 4 is that which was generated in test 1 of Figure 5) with the selected frequency component being that at which the amplitude of the frequency spectrum first reached 50% of the maximum value. In general the results indicate that for poles with some decay the selected frequency component is less than approximately 275 Hz, whilst for those poles without any decay the selected frequency component is greater than approximately 275 Hz.

Thus, the selected frequency component can be used as an indicator of whether the pole has any decay by comparison with a set of reference data. The selected frequency component can be compared with a single data point to give a safe/unsafe indication or with a larger data set to give an indication of the extent of the decay within the pole. This comparison with a set of reference data is only valid if the method used to select the frequency component when compiling the reference data is the same as, or sufficiently similar so as to obtain substantially the same results, as the method used to select the frequency component when testing timber elements for decay.

The timber elements to be tested may be telegraph poles, as are used in telecommunications and utility networks, but the method, and the apparatus, of the present invention is equally suitable for use with structural timber elements, i.e. joists, beams, planking, etc. commonly found in buildings and other structures. In order to determine the point at which the element(s) can be determined to be either free of decay or decayed it will be necessary to perform some form of characterising test program using timber elements having a known level of decay. Alternatively the timber element may be a tree or a branch of a tree.

The test apparatus may take a number of forms. The data capture means may be any digital recording apparatus e.g. DAT (Digital Audio Tape), MiniDisc, DCC (Digital Compact Cassette), recordable CD (Compact Disc) or DVD (Digital Versatile Disc), hard disk, etc. Alternatively, analogue recording apparatus means may be used, with suitable digital to analogue conversion being used if the data processing is to be performed using digital data rather than analogue data, digital data processing normally being preferred due to its greater availability and flexibility.

The entire apparatus may be implemented using a personal computer (PC) equipped with a microphone, the PC digitising and storing the test data and using appropriate software to process the data, extract the required frequency component and then indicating the test result using either the display or the computer's audio capabilities. Software suitable for carrying out the method of the present invention (and thus transforming a suitable PC into apparatus according to the present invention) may be supplied on conventional computer media, e.g. floppy disk, CD-ROM, DVD, etc., or over a computer or communications network.

The identification means of the apparatus may give a simple indication of the timber element's condition e.g. safe or unsafe, using a display panel or by emitting associated sounds. Alternatively, the apparatus may give an indication of the condition of the timber element by displaying, for example a rating of the condition of the element or placing the element in a category indicating the condition of the element. This information could then be interpreted by the apparatus user when determining whether the timber element is safe or not.

If the apparatus of the invention were to be used widely by the field staff who maintain a utility network then it would be preferred to minimise the size and cost of the apparatus and to ruggedise the apparatus so that it would be capable of being used in the range of temperatures, environments, etc. to which it would be exposed during such usage. It may be preferred to add some form of communications capability so that the apparatus could transfer data to or from a database holding information regarding pole identity and pole characteristics. Such data could be analysed to show trends in pole condition over time and could be used to initiate repair or replacement activities before a pole poses a safety hazard. It may be possible to integrate the functionality of the test apparatus with that of other equipment carried by field staff in order to reduce complexity.

The test method of the invention could, in principle, be carried out using a mobile phone to capture an acoustic signal when struck with a hammer or the like, the signal being carried over the mobile phone network to a central computer which stores the reference data and performs the comparison step. Clearly, the acoustic properties of the mobile phone and the mobile phone network would need to be taken into account in defining the reference data and comparison process.

## Claims

**1.** Timber decay test apparatus comprising;
data capture means configured to, in use, capture the acoustic response of a timber element;
data processing means configured to, in use, select a component from the frequency spectrum of the acoustic response;
comparison means configured to, in use, compare the selected frequency spectrum component with stored reference data; and
indicator means configured to, in use, indicate the decay state of the timber element in response to the comparison of the selected frequency spectrum component with said reference data.

**2.** Timber decay test apparatus according to claim 1 wherein the data capture means comprises a digital recording means.

**3.** Timber decay test apparatus according to claim 1 or claim 2 wherein the data processing means generates, in use, the frequency spectrum of the acoustic response by transforming the time spectrum of the acoustic response.

**4.** Timber decay test apparatus according to claim 3 wherein the data processing means generates, in use, the frequency spectrum of the acoustic response by applying a Fourier transform to the time spectrum of the acoustic response.

**5.** Timber decay test apparatus according to any of claims 1 to 4, wherein the test apparatus further comprises storage means configured to, in use, store at least one selected frequency spectrum component.

**6.** Timber decay test apparatus according to any of claims 1 to 5, wherein the test apparatus further comprises communication means configured to, in use, communicate at least one selected frequency spectrum component to a remote database.

**7.** A method of testing for decay in a timber element, the method comprising the steps of;
generating an acoustic response from the timber element;
selecting a component from the frequency spectrum of the acoustic response;
comparing the selected frequency component with stored reference data; and
determining the state of the timber element on the basis of the results of the comparison step.

**8.** A method of testing for decay in a timber element according to claim 7, wherein the frequency spectrum of the acoustic response is generated by transforming the time spectrum of the acoustic response.

**9.** A method of testing for decay in a timber element according to either claim 7 or claim 8, wherein the acoustic spectrum is smoothed to reduce the effects of noise.

**10.** A method of testing for decay in a timber element according to any of claims 7 to 9, wherein the selected frequency component is the frequency at which the acoustic response frequency spectrum has substantially its maximum value.

**11.** A method of testing for decay in a timber element according to any of claims 7 to 9, wherein the selected frequency component is a frequency at which the acoustic response frequency spectrum is within the range of 20% to 85% of the maximum value of the acoustic response frequency spectrum.

**12.** A method of testing for decay in a timber element according to claim 11, wherein the selected frequency component is the frequency at which the acoustic response frequency spectrum is substantially 50% of the maximum value of the acoustic response frequency spectrum.

**13.** A data carrier containing computer code for loading into a computer for the performance of any of claims 7 to 12.

**13.** Timber decay test apparatus comprising a personal computer and a data carrier according to claim 12.
